Europäisches Patentamt

European Patent Office

Office européen des brevets

(19)

(11) Veröffentlichungsnummer: **0 312 013**
**A2**

## (12) EUROPÄISCHE PATENTANMELDUNG

(21) Anmeldenummer: **88116938.7**

(22) Anmeldetag: **12.10.88**

(51) Int. Cl.⁴: **B29C 67/24**

(30) Priorität: **13.10.87 DE 3734645**

(43) Veröffentlichungstag der Anmeldung:
**19.04.89 Patentblatt 89/16**

(84) Benannte Vertragsstaaten:
**CH DE ES FR GB IT LI**

(71) Anmelder: **EMS-INVENTA AG**

**CH-8001 Zürich(CH)**

(72) Erfinder: **Schultze, Hans-Joachim, Dr.,**
**Dipl.-Chem.**
**Tittwiesenstrasse 11**
**CH-7000 Chur(CH)**
Erfinder: **Liedloff, Hanns-Joerg, Dr.,**
**Dipl.-Chem.**
**Untere Bahnhoffstrasse 59**
**.CH-7013 Domat/Ems(CH)**

(74) Vertreter: **Patentanwälte Müller-Boré, Deufel,**
**Schön, Hertel, Lewald, Otto**
**Isartorplatz 6**
**D-8000 München 2(DE)**

(54) Formkörper.

(57) Die Erfindung betrifft Formkörper aus Mischungen aus

I) wenigstens 50 Gew.-%, bezogen auf die gesamte Mischung, eines oder mehrerer Polyamide und

II) einem oder mehreren thermotropen flüssig-kristallinen Polymeren, das (die) oberhalb 200° C eine optisch anisotrope Schmelze bildet (bilden),

die sich dadurch auszeichnen, daß sie durch Umformverfahren von Vorformlingen bei Temperaturen unterhalb des Polyamidschmelzpunktes und oberhalb der Glasübergangstemperatur des Polyamids erhältlich sind.

Diese Formkörper besitzen wesentlich bessere mechanische Eigenschaften, wie Reißfestigkeit und Reißdehnungen, als bisher bekannte Formkörper aus den vorstehend genannten Komponenten I und II..

EP 0 312 013 A2

## Formkörper

Die Erfindung betrifft Formkörper aus Mischungen von Polyamiden und thermotropen flüssigkristallinen Polymeren, die sich durch hohe mechanische Festigkeit auszeichnen.

Mischungen aus Polyamiden und thermotropen flüssigkristallinen Polymeren sind beispielsweise aus der DE-OS 32 16 413 bekannt. Es ist außerdem bekannt, daß derartige Mischungen durch Spritzgießen oder Extrudieren zu Formkörpern verarbeitet werden können, die eine höhere Steifigkeit und Festigkeit besitzen als Formkörper, die aus reinen Polyamiden erzeugt worden sind.

Die mechanischen Eigenschaften der aus den erwähnten Mischungen erhaltenen Formkörper sind jedoch noch ungenügend.

Die Erfindung hat sich daher die Aufgabe gestellt, Formkörper zu schaffen, die gegenüber den vorstehend beschriebenen bekannten verbesserte mechanische Eigenschaften besitzen.

Diese Aufgabe wird durch die erfindungsgemäßen Formkörper aus I) wenigstens 50 Gew.-% eines oder mehrerer Polyamide und II) eines oder mehrerer flüssig-kristalliner Polymerer, das (die) oberhalb 200°C eine optisch anisotrope Schmelze bildet (bilden) gelöst, welche dadurch gekennzeichnet sind, daß sie durch Umformverfahren von Vorformlingen bei Temperaturen unterhalb des Polyamidschmelzpunktes und oberhalb der Glasübergangstemperatur des Polyamids erhältlich sind.

Die Vorformlinge können nach herkömmlichen Formgebungsmethoden hergestellt werden, insbesondere durch Spritzgießen oder Extrudieren. Aus diesen Vorformlingen werden dann mit Hilfe bekannter Umformungsverfahren, wie beispielsweise des sogenannten Preßreckens oder Spritzgießreckens bzw. Walzpreßreckens (vgl. beispielsweise "Kunststoffe", 72. Jahrgang 1982, Heft 7, S. 402 - 407), bei Temperaturen unterhalb der Schmelztemperatur und oberhalb der Glasübergangstemperatur des Polyamids I die erfindungsgemäßen Formkörper hergestellt. In überraschender Weise wurde dabei festgestellt, daß das Umformungsverfahren auch in solchen Fällen möglich ist, in denen die Umformungstemperatur deutlich unterhalb der Glasübergangstemperatur des flüssigkristallinen Polymeren liegt.

Als Polyamide I werden vorzugsweise solche verwendet, bei denen das Verhältnis der Amidgruppen zu den übrigen Kohlenstoffatomen 1 : 4 bis 1 : 15 beträgt. Als Rohstoffe für diese Polyamide kommen insbesondere Lactame oder $\omega$-Aminocarbon-Säuren mit 6 bis 12 Kohlenstoffatomen in Frage, wie Caprolactam, Laurinlactam, Aminocapronsäure, 11-Aminoundecansäure oder 12-Aminododecansäure. Diese Substanzen, die nach bekannten Verfahren erhältlich sind, sind bekannt.

Die Polyamide I können auch aus äquimolaren Mengen einer Dicarbonsäure mit 6 bis 13 Kohlenstoffatomen und einem Diamin mit 4 bis 18 Kohlenstoffatomen hergestellt werden und können allein oder in Mischungen eingesetzt werden, wobei, wie bereits erwähnt vorzugsweise das Verhältnis der Amidgruppen zu den übrigen Kohlenstoffatomen in den Polyamiden 1 : 4 bis 1 : 15 beträgt.

Als thermotrope, flüssigkristalline Polymere II, die oberhalb 200°C eine optisch anisotrope Schmelze bilden, werden erfindungsgemäß vorzugsweise vollaromatische Polyester, vollaromatische Polyesteramide, aromatisch-aliphatische Polyester oder aromatisch-aliphatische Polyesteramide, vorzugsweise in Mengen von 1 bis 30 Gew.-% und insbesondere von 5 bis 20 Gew.-%, bezogen auf das Gesamtgewicht der Mischung, eingesetzt.

Repräsentative Beispiele für vollaromatische Polyester mit den geeigneten thermotropen flüssigkristallinen Eigenschaften werden in den folgenden US-Patentschriften beschrieben:

3,991,013; 3,991,014; 4,066,620; 4,067,852; 4,075,262; 4,083,829; 4,093,595; 4,118,372; 4,130,545; 4,146,702; 4,153,779; 4,156,070; 4,159,365; 4,161,470; 4,169,933; 4,181,792; 4,183,895; 4,184,996; 4,188,476; 4,201,856; 4,219,461; 4,224,433; 4,226,970; 4,230,817; 4,232,143; 4,232,144; 4,238,598; 4,238,599; 4,238,600; 4,242,496; 4,245,082; 4,245,084; 4,247,514; 4,256,624; 4,265,802; 4,267,304; 4,269,965; 4,279,803; 4,294,955; 4,299,756; 4,318,841; 4,337,190; 4,337,191; 4,355,134; 4,412,058; 4,429,100; 4,431,770; 4,447,592; 4,499,256; 4,500,699;

Weitere erfindungsgemäß einsetzbare vollaromatische Polyester werden in den DE-OSen 35 17 270; 35 17 948; 33 25 703; 33 25 705; 33 25 787; 33 38 623 beschrieben. Bevorzugt werden dabei die vollaromatischen Polyester eingesetzt, deren Polymerketten 4-Oxy-benzoyl- und 6-Oxy-2-naphthoyl-Einheiten aufweisen, beispielsweise diejenigen, die in den US-Patentschriften 4,161,470 oder 4,184,996 beschrieben werden.

Repräsentative Beispiele für vollaromatische Polyesteramide, die erfindungsgemäß eingesetzt werden können, werden in den US-Patentschriften 4,330,457; 4,351,917; 4,351,918 und 4,341,688 beschrieben.

Repräsentative Beispiele für aromatisch-aliphatische Polyester mit thermotropen flüssig-kristallinen Eigenschaften umfassen auch Copolymere aus Hydroxybenzoesäure und Polyalkylenterephthalat, wie sie in

2

EP 0 312 013 A2

den US-Patentschriften 3,804,805; 4,138,842 und 4,355,133 beschrieben werden.

Repräsentative Beispiele für erfindungsgemäß einsetzbare aromatisch-aliphathische Polyester werden in der japanischen Offenlegungsschrift 58.176.216 beschrieben.

Die eingesetzten vollaromatischen oder aromatisch-aliphatischen Polyester bzw. Polyesteramide können an ihren Polymerketten noch andere funktionelle Gruppen aufweisen, wie beispielsweise Imid-, Carbonat-, Harnstoff-, Ether-, Keto-, Sulfid-, Sulfon- oder Azogruppen. Sie können ferner an den aromatischen Einheiten durch Halogenatome oder Alkylreste, insbesondere Alkylreste mit 1 bis 4 Kohlenstoffatomen, substituiert sein.

Das Vermischen der Komponenten I und II erfolgt vorzugsweise in bekannter Weise durch Aufschmelzen und Vermischen der Komponenten in ein- oder zwei-welligen Extrudern.

Die Erfindung wird durch die nachfolgenden Beispiele näher erläutert. Die relative Lösungsviskosität des eingesetzten Polyamid-12 wurde anhand einer 0,5 %igen Lösung des Polyamids in m-Kresol nach den Bedingungen gemäß DIN 53727 gemessen. Sie beträgt 2,25.

Die Werte für die Reißfestigkeit und die Reißdehnung wurden nach DIN 53455 an Norm-Schulterstäben gemessen.

Bei dem zur Durchführung der Beispiele eingesetzten thermotropen, flüssigkristallinen Polymeren handelt es sich um einen vollaromatischen Polyester mit 73 Mol-% 4-Oxy-benzoyl- und 27 mol-% 6-Oxy-2-naphtholyl-Einheiten .

Es wurden zwei Mischungen zur Herstellung der Formkörper verwendet, und zwar a) eine Mischung aus 85 Gew-% des oben erwähnten PA-12 und 15 Gew-% Vectra A 900, und b) 95 Gew-% PA-12 und 5 Gew-% Vectra A 900.

Zur Herstellung der Mischung wurde ein Doppelschneckenextruder ZSK-30 der Fa. Werner & Pfleiderer (Stuttgart) verwendet. Die Schmelztemperatur betrug 290° C bei Gehäusetemperaturen von maximal 285° C, die Schnecke drehte sich mit 180 Upm und der Durchsatz betrug 8 kg/h (Vectra A 900 bildet oberhalb 280° C eine optisch anisotrope Schmelze und die Glasübergangstemperatur des Materials beträgt ca. 120° C.)

Beispiel 1

Unter Herstellung der vorstehend beschriebenen Mischungen a) und b) wurden Norm-Schulterstäbe mit einem Querschnitt von 10 mm x 4 m durch Spritzgießpreßstrecken (SPR) hergestellt. Dazu wurden zunächst in einer herkömmlichen Spritzgießmaschine unter den für hochviskoses Polyamid-l2 üblichen Verarbeitungsbedingungen Vorformlinge mit einem Querschnitt von 10 mm x 6,4 mm hergestellt. Die Vorformlinge wurden dann in ein Preßreckwerkzeug mit den endgültigen Formkörperabmessungen von 10 mm x 4 mm eingelegt und bei einer Werkzeugtemperatur von 70° C, einer Umformkraft von 65 t und einer Abkühlzeit von 210 sec umgeformt. Das Werkzeug war dabei in einer Spritzgießmaschine installiert.

Die auf diese Weise erhaltenen Schulterstäbe besaßen einen Reckgrad von 1,6 (Verhältnis ihrer Länge zu der Länge der Vorformlinge). Zugversuche an diesen Prüfkörpern ergaben folgende Werte:

|  | Mischung a) | Mischung b) |
|---|---|---|
| Reißfestigkeit | 110 N/mm² | 92 N/mm² |
| Reißdehnung | 30 % | 30 % |

Vergleichsbeispiel 2

Aus der Mischung des Beispiels 1 wurden Norm-Schulterstäbe mit 10 mm x 4 mm Querschnitt unter den gleichen Bedingungen, wie sie für die Vorformlänge von Beispiel 1 eingehalten wurden, spritzgegossen. Das Preßrecken wurde in diesem Falle nicht durchgeführt. Zugversuche an diesen Prüfkörpern ergaben folgende Ergebnisse:

3

|  | Mischung a) | Mischung b) |
|---|---|---|
| Reißfestigkeit | 50 N/mm² | 46 N/mm² |
| Reißdehnung | 160 % | 180 % |

Demgemäß werden bei der Durchführung des erfindungsgemäßen Verfahrens die Reißfestigkeit und die Reißdehnung drastisch verbessert, wobei anzumerken ist, daß unverstärktes Polyamid-12 durch Preßrecken nur auf etwa 75 N/mm² gebracht werden kann.

**Ansprüche**

1. Formkörper aus Mischungen aus
I) wenigstens 50 Gew.-%, bezogen auf die gesamte Mischung, eines oder mehrerer Polyamide und
II) einem oder mehreren thermotropen flüssig-kristallinen Polymeren, das (die) oberhalb 200° C eine optisch anisotrope Schmelze bildet (bilden),
dadurch gekennzeichnet, daß sie durch Umformverfahren von Vorformlingen bei Temperaturen unterhalb des Polyamidschmelzpunktes und oberhalb der Glasübergangstemperatur des Polyamids erhältlich sind.

2. Formkörper nach Anspruch 1, dadurch gekennzeichnet, daß sie das thermotrope flüssig-kristalline Polymere in einer Menge von 1 bis 30 Gew.-%, insbesondere 5 bis 20 Gew.-%, bezogen auf das Gesamtgewicht der Mischung, enthalten.

3. Formkörper nach den Ansprüchen 1 bis 2, dadurch gekennzeichnet, daß die Vorformlinge durch Spritzgießen oder Extrudieren erhältlich sind.

4. Formkörper nach den Ansprüchen 1 bis 3, dadurch gekennzeichnet, daß sie erhältlich sind unter Einsatz von Polyamiden, bei denen das Verhältnis der Amidgruppen zu den übrigen Kohlenstoffen 1 : 4 bis 1 : 15 beträgt.

5. Formkörper nach den Ansprüchen 1 bis 4, dadurch gekennzeichnet, daß sie unter Verwendung von vollaromatischen Polyestern als thermotrope flüssigkristalline Polymere II erhältlich sind.

5. Formkörper nach den Ansprüchen 1 bis 4, dadurch gekennzeichnet, daß sie unter Einsatz von vollaromatischen Polyesteramiden als thermotrope flüssigkristalline Polymere II erhältlich sind.

6. Formkörper nach den Ansprüchen 1 bis 4, dadurch gekennzeichnet, daß sie unter Einsatz von vollaromatischen Polyesteramiden als thermotrope flüssig-kristalline Polymere II erhältlich sind.

7. Formkörper nach den Ansprüchen 1 bis 4, dadurch gekennzeichnet, daß sie unter Einsatz von aromatisch-aliphatischen Polyesteramiden als thermotrope flüssig-kristalline Polymere II erhältlich sind.

8. Formkörper nach den Ansprüchen 1 bis 4, dadurch gekennzeichnet, daß sie unter Einsatz von aromatisch-aliphatischen Polyesteramiden als thermotrope flüssig-kristalline Polymere II erhältlich sind.